# EUROPÄISCHE PATENTSCHRIFT

(11) **EP 0 837 996 B1**
(45) Veröffentlichungstag und Bekanntmachung des Hinweises auf die Patenterteilung: **11.09.2002**
(21) Anmeldenummer: 96920726.5
(22) Anmeldetag: 25.06.1996
(51) Int. Cl.: F16C 33/20, C08K 3/38, C08K 3/32, C08K 3/16, C08K 3/00

(54) **GLEITLAGERWERKSTOFF UND DESSEN VERWENDUNG**
SLIDING BEARING MATERIAL AND ITS USE
MATERIAU CONSTITUTIF DE PALIERS LISSES ET SON UTILISATION

(30) Priorität: 08.07.1995 DE 19524968
(43) Veröffentlichungstag der Anmeldung: 29.04.1998
(73) Patentinhaber: Federal-Mogul Wiesbaden GmbH & Co.KG, 65201 Wiesbaden (DE)
(72) Erfinder: ADAM, Achim, D-64569 Nauheim (DE)
(74) Vertreter: Fuchs Mehler Weiss & Fritzsche
(86) Internationale Anmeldenummer: DE9601154
(87) Internationale Veröffentlichungsnummer: WO97003299

(56) Entgegenhaltungen:
- EP-B- 0 189 626
- WO-A-92/04551
- DE-A- 3 520 068
- DE-B- 1 132 710
- FR-A- 1 445 542
- GB-A- 2 274 844
- JP-A- 58 138 747
- US-A- 3 879 301
- PATENT ABSTRACTS OF JAPAN vol. 011, no. 124 (C-416), 17.April 1987 & JP 61 261396 A (DAIDO METAL KOGYO KK), 19.November 1986,

## Beschreibung

Die Erfindung betrifft einen Gleitlagerwerkstoff mit einem porösen Bronzegerüst, in das ein Gleitmaterial eingelagert ist.

Lagermaterialien mit Gleitschichten auf Kunststoffbasis sind als ein-, zwei- oder dreischichtige Verbundwerkstoffe bekannt: Vollkunststofflager, Lager mit äußerem metallischen Stützkörper und direkt aufgebrachtem oder aufgeklebtem Kunststoff, solche mit internem Metallgewebe, sowie Dreischichtlager aus Stützmetall, gesinterter poröser Metallschicht und einer auf und in den Poren ausgebildeten Deckschicht. Alle diese Lager werden meist in Bereichen eingesetzt, in denen die Verwendung von Schmierstoffen nicht möglich oder unerwünscht ist. Deshalb müssen sie selbst im Betriebszustand diese Schmierstoffe zur Verfügung stellen.

Die mehrschichtigen Werkstoffe unterscheiden sich von den Vollkunststoffmaterialien z.B. durch eine vernachlässigbare Neigung zu kaltem Fluß unter Belastung, einer wesentlich besseren Wärmeleitfähigkeit und damit verbunden durch deutlich höhere mögliche pv-Werte. Jedoch können auch Vollkunststoffmaterialien in bestimmten Fällen, z.B. aus Kostengründen, von Vorteil sein.

Innerhalb der Dreischichtwerkstoffe kann man nun wieder solche mit Gleitschichten auf der Basis von Fluorthermoplasten wie PTFE, PFA, FEP, etc. oder von anderen Kunststoffen, wie z.B. PEEK unterscheiden. Diese beiden Gruppen müssen in ihrer Funktionsweise unterschieden werden: Während die Bronze-Zwischenschicht bei PTFE-Basiswerkstoffen "aktiver" lasttragender Bestandteil der Gleitschicht ist und ähnlich wie ein Füllstoff wirkt, nützen die anderen Kunststoffmaterialien diese nur als Verankerung. Sie lassen bei genügend hoher Affinität zum Metallrücken die Herstellung echter Zweischichtmaterialien zu, können aber auch mit Hilfe einer Klebeschicht aufgebracht sein. Auf der aktiven Gleitschicht selbst übernimmt hier der Duro- oder Thermoplast die tragende Rolle der Bronze. Weiter sind Lagermaterialien aus auf Metall geklebten gefüllten Fluorthermoplast-Folien oder solche mit in Kunststoff inkorporierten Metallgeweben bekannt, die ebenfalls auf einen Metallrücken aufgeklebt sein können.

Universell einsetzbar und leicht herstellbar sind die Dreischicht-Werkstoffe auf der Basis der Fluorthermoplaste wie PTFE, die auch die höchste Leistungsfähigkeit und Temperaturbeständigkeit aufweisen. Im Produktionsprozeß werden über eine Kunststoffdispersion homogene PTFE/Füllstoff-Pasten erzeugt und nach dem Aufwalzen auf das Trägermaterial durch abschließendes Sintern des PTFE der endgültige Verbundwerkstoff hergestellt.

Die gebräuchlichsten verwendeten Füllstoffe für solche Werkstoffe sind Blei und Molybdändisulfid, wobei diese Materialien nahezu die gleiche Leistungsfähigkeit ergeben. Diese Füllstoffe können auch in Gegenwart von Schmiermitteln angewendet werden.

In vielen Fällen wäre die Lösung konstruktiver Problemstellungen unter Verwendung von wartungsfreien platzsparenden Gleitlagern mit PTFE-Gleitschichten wünschenswert. Die obere Belastungsgrenze, die im mittleren Lastund Geschwindigkeitsbereich (0,5 - 100 MPa und 0,02 - 2 m/s) bei einem pv-Wert von 2 mPa m/s liegt, kann einen Einsatz dieser Gleitlager jedoch einschränken.

Aus der DE 41 06 001 A1 ist es bekannt, daß durch Verwendung von PbO als Füllstoff auch leistungsfähigere Gleitlagerwerkstoffe erzeugt werden können, jedoch wird die Verwendung von Materialien mit einem gesundheitsgefährdenden Potential wie Blei in zunehmendem Maße abgelehnt. Außerdem sind solche für den schmierungsfreien Einsatz optimierte Materialien z.B. für den Einsatz als Führungsbuchsen für Stoßdämpferkolbenstangen ungeeignet, weil sie unter diesen Bedingungen nicht die notwendige Verschleiß- und Kavitationsbeständigkeit oder jedoch unbefriedigend hohe Reibwerte aufweisen.

Lagerwerkstoffe mit Gleitschichten, die nur aus PTFE und Molybdändisulfid bestehen, sind seit langem bekannt und gehören derzeit zu den am häufigsten eingesetzten schmierungsfreien Lagermaterialien. Auch Bornitrid als bekannter Festschmierstoff wird immer wieder als möglicher Füllstoff für PTFE erwähnt, wenngleich die Schmierstoffeigenschaften hier erst bei Temperaturen oberhalb von 800°C wirksam werden.

So sind sowohl Molybdänsulfid als auch Bornitrid bereits in der DE-PS 11 32 710 als Beispiel in einer Aufzählung von Festschmierstoffen als Füllstoff genannt. Die gleichzeitige Verwendung von Molybdändisulfid und Bornitrid in PTFE wird jedoch nicht erwähnt.

Die JP-A-58138747 beschreibt ein Schmiermittelgemisch aus 5-60 Gew.-% Fluorthermoplasten, 1-20 Gew.-% Bornitrid und einem Matrixmaterial aus aromatischem Polysulfon. Dieses Material kann auch als Gleitelement eingesetzt werden. Die Zugabe von 5 Gew.-% MoS2 wird in einem einzigen Beispiel erwähnt, allerdings ist dieses Material bezüglich des Reibungskoeffiizienten am zweitschlechtesten im Vergleich zu den Materialien, die nur Bornitrid enthalten.

Die US-A-3879301 beschreibt ein Gleitmaterial, das ebenfalls ein Matrixmaterial aus Kunststoff aufweist, in das gefülltes PTFE eingebracht ist. Unter der großen Anzahl von Füllstoffen werden auch MoS2 und Bornitrid erwähnt, allerdings gibt es keinen Hinweis, allein diese beiden Komponenten in Kombination einzusetzen. Bevorzugt und in den Beispielen erwähnt sind lediglich die Füllstoffe Cadmiumoxid und Bronze.

Die DE-PS 1132710 beschreibt ein Verfahren zum kontinuierlichen Einbringen von PTFE-Teilchen unter Druck und Hitze in einen bandförmigen Metallstreifen mit poröser Schwammstruktur. Es werden PTFE-Teilchen mit einer wesentlich geringeren Größe als die der Poren im Metallstreifen verwendet, wobei das Einbringen mit so geringem Druck erfolgt, daß ein vollständiges Schließen der Poren des Metallstreifens vermieden wird. Durch anschließendes Erwärmen erfolgt ein Zusammenschmelzen der PTFE-Teilchen. Es können feste Schmiermittel, wie Molybdändisulfid, Graphit, Bornitrid, Wolframsulfit usw. in irgendeiner Stufe den Polytetrafluoräthylenteilchen zugemischt werden. Schmiermittel von kolloidalen Abmessungen werden bevorzugt. Es ist wesentlich, daß die Schmiermittelteilchen kleiner als die Poren des porösen Gefüges des Metallstreifens sind, und vorzugsweise sollen sie von der gleichen Größenordnung sein wie die Polytetrafluoräthylenteilchen, d.h. vorzugsweise unter 1 µm.

In keiner der genannten Schriften wird erwähnt, daß BN und MoS₂ irgendeinen Vorteil gegenüber der Verwendung der Einzelkomponenten bewirken.

Aufgabe dieser Erfindung ist es, eine Füllstoffkombination zur Verfügung zu stellen, die die o.g. Vorteile der thermoplasthaltigen Kunststofflagerwerkstoffe erweitert, ohne daß dabei auf Blei oder Bleiverbindungen zurückgegriffen werden muß.

Diese Aufgabe wird mit einem Gleitlagerwerkstoff gelöst, das ein poröses Bronzegerüst aufweist, in das ein Gleitmaterial eingelagert ist, wobei
- das Gleitmaterial aus mindestens einem Fluorthermoplasten und Füllstoffen besteht,
- der Anteil des Fluorthermoplasts bzw. der Fluorthermoplaste 50 bis 85 Vol.-% beträgt,
- als Fluorthermoplast PTFE bzw. als Fluorthermoplaste PTFE mit Zusätzen eines oder mehrerer Fluorthermoplaste aus ETFE, PCTFE, ECTFE, PVDF, PFA oder FEP vorgesehen sind, und
- die Füllstoffe bezogen auf das Gleitmaterial aus:
   - 5 bis 48 Vol.-% Bornitrid in hexagonaler Modifikation und
   - 2 bis 45 Vol.-% mindestens einer Metallverbindung mit Schichtstruktur gewählt aus MoS2, Wolframsulfid, Titansulfid und Titanjodid bestehen,
- wobei gegebenenfalls bis zu 40 Vol.-% der Füllstoffkombination Bornitrid/Metallverbindung durch weitere Füllstoffe ersetzt sind.

Es hat sich gezeigt, daß durch die Füllstoffkombination aus Bornitrid in hexagonaler Modifikation, und mindestens einer Metallverbindung aus Molybdändisulfid, Wolframsulfid, Titansulfid oder Titanjodid die Eigenschaften von Kunststofflager-Werkstoffen gegenüber den Lagerwerkstkoffen, die nur jeweils einen dieser Füllstoffe enthalten, deutlich verbessert werden können. Zu diesen Eigenschaften zählen insbesondere die Belastbarkeit, die Verschleißfestigkeit und die Kavitationsbeständigkeit.

Bei diesen Metallverbindungen handelt es sich um solche mit Schichtstruktur, unter der eine Anisotropie des Kristallgitters in der Form verstanden wird, daß durch schwache Wechselwirkungen der atomaren Bausteine bei äußerer Krafteinwirkung eine Verschiebung von bestimmten Gitterebenen gegeneinander erleichtert ist.

Bei den Gleitlagerwerkstoffen auf PTFE-Sinterbronze-Basis wird die Leistungsfähigkeit so weit verbessert, daß unter schmierungsfreien Bedingungen pv-Werte im mittleren Last- und Geschwindigkeitsbereich bis zu 5 MPam/s erreicht werden können. Gleichzeitig zeichnen sich diese Materialien durch eine verbesserte Kavitationsbeständigkeit und durch Reibwerte unter Ölschmierung aus, die dem Stand der Technik vergleichbar sind.

Vorzugsweise liegen die Anteile von Bornitrid bei 6,25 - 32 Vol.-% und die der Metallverbindung bei 5 - 30 Vol.-%. Die Teilchengröße dieser Füllstoffe liegt vorzugsweise unter 40 µm, insbesondere unter 20 µm.

Außerhalb der erfindungsgemäßen Verhältnisse werden gegenüber den Kombinationen von PTFE und Bornitrid oder PTFE und MoS₂ keine wesentlichen Verbesserungen erreicht. Es ist jedoch möglich, ausgehend von den o.g. Zusammensetzungen bis zu 40 Vol.-% der Füllstoffkombination Bornitrid/Metallsulfid vorzugsweise jedoch nicht mehr als 20 Vol.-% durch weitere Komponenten wie Duroplaste oder Hochtemperaturthermoplaste, wie z.B. Polyimide oder Polyamidimide, andere Festschmierstoffe, z.B. Graphit, durch Pigmente wie z.B. Koks und durch Faserstoffe wie z.B. Graphit-Kurzfasern oder Aramidfäsern oder Hartstoffe wie z.B. Borcarbid oder Siliziumnitrid zu ersetzen.

Der Gleitlagerwerkstoff kann auch als Gleitschicht eines Mehrschichtwerkstoffes Verwendung finden, wobei die Gleitschicht direkt auf einen Metallrücken aufgebracht sein kann.

Die Mehrschichtwerkstoffe mit einer Gleitschicht mit einer Sinterbronze-Matrix sind derart aufgebaut, daß auf dem Stützmetall wie z.B. Stahl oder einer Kupferoder Aluminiumlegierung eine 0,05 - 0,5 mm dicke Schicht Bronze so aufgesintert wird, daß sie ein Porenvolumen von 20 - 45% aufweist und die Zusammensetzung der Bronze selbst 5 - 15% Zinn und wahlweise bis zu 15% Blei enthält. Die Gleitmaterialmischung wird dann durch Einwalzen so auf den porösen Untergrund angebracht, daß die Poren vollständig ausgefüllt sind und je nach Anwendungsfall eine 0 - 50 µm dicke Deckschicht entsteht. Im folgenden wird das Material in einem Ofen einer Wärmebehandlung unterzogen, bei der das enthaltene PTFE drei Minuten bei 380° gesintert wird, um in einem abschließenden Walzschritt den endgültigen Verbund und das erforderliche Endmaß herzustellen.

Beispielhafte Ausführungen werden nachfolgend anhand der Figuren und Tabellen näher erläutert. Es zeigen:
- Figur 1: die Verschleißrate in Abhängigkeit vom Bornitridgehalt am Füllstoff, und
- Fign. 2-4: die graphischen Darstellungen der in den Tabellen zusammengestellten Versuchsergebnisse.

Die Herstellung der Gleitmaterialmischung kann, wie für Beispiel 1 unten beschrieben ist, über eine PTFE-Dispersion erfolgen, der die Füllstoffe so beigemischt werden, daß sie bei der nachfolgend herbeigeführten Koagulation in homogener Verteilung mitgerissen werden. Hierbei entsteht eine pastöse Masse, die die für den nachfolgenden Beschichtungsprozeß erforderlichen Eigenschaften aufweist.

### Beispiel 1:

12 1 Wasser, 25 g Natriumlaurylsulfat, 3 kg Bornitrid, 15,9 kg Molybdänsulfid und 34 kg einer 35%-igen PTFE Dispersion werden 20 min kräftig gerührt. Dann werden 100 g einer 20%-igen Aluminiumnitratlösung zugegeben. Nach erfolgter Koagulation wird 1 1 Toluol in das Gemisch eingerührt und die ausgetretene Flüssigkeit entfernt.

Die weiteren, in den Tabellen 1 bis 4 genannten Beispiele aus der Gruppe der Dreischichtsysteme mit PTFE/Bronze-Matrixgleitschicht können alle in dieser Weise hergestellt werden. Im folgenden sind daher nur noch die Zusammensetzungen der Kunststoffmischungen genannt.

Die in beschriebener Weise hergestellten Werkstoffe sind in den erfindungsgemäßen Zusammensetzungen den Standardwerkstoffen auf der Basis PTFE/MoS₂ oder PTFE/Pb sowohl bezüglich des Reibwertes als auch der Verschleißfestigkeit deutlich überlegen.

Um die Eigenschaften wie Verschleißfestigkeit und Reibwert zu untersuchen, wurden die Zusammensetzungen aus PTFE, Bornitrid und Molybdändisulfid über einen großen Bereich variiert und Proben der beschriebenen Dreischichtmaterialien aus 1,25 mm Stahl, 0,23 mm Bronze und 0,02 mm Kunststoffdeckschicht hergestellt. An diesen Proben wurden mittels eines Stift/Walzen-Tribometers mit Prüflingen von 0,78 cm² die Verschleißraten bei einer Umfangsgeschwindigkeit von 0,52 m/s und einer Belastung von 17,5 MPa gemessen und mit einem Standardmaterial verglichen. Als Standardmaterial wurde ein Verbundmaterial beschriebener Art mit einer Kunststoffschicht aus 80 Vol.-% PTFE und 20 Vol.-% MoS₂ herangezogen.

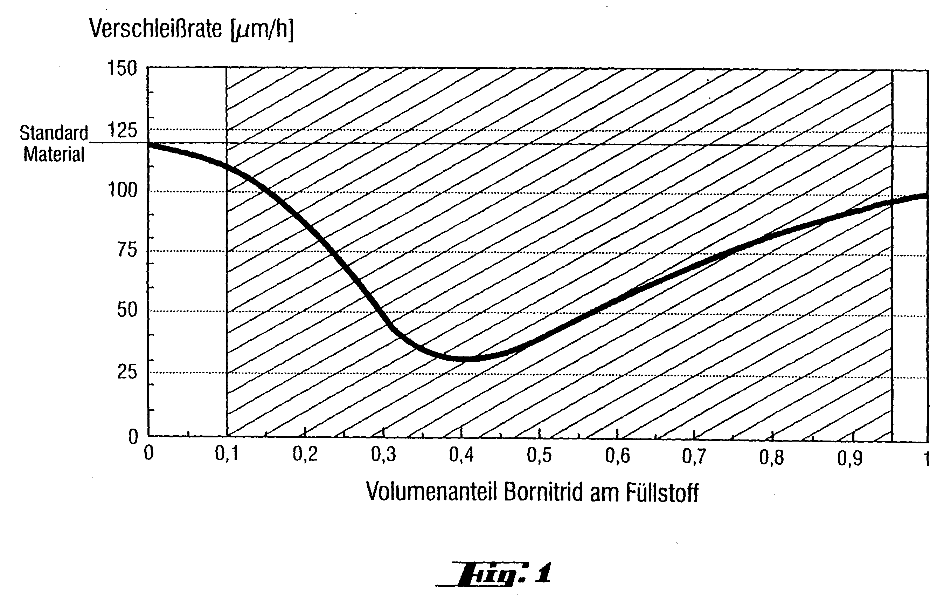

In der Figur 1 ist die Verschleißrate in Abhängigkeit vom Bornitridgehalt am Füllstoff dargestellt, wobei der Gesamtfüllstoff konstant bei 30 Vol.-% gehalten wurde. Es ist deutlich zu sehen, daß im schraffierten erfindungsgemäßen Bereich ein ausgeprägtes Verschleißminimum vorliegt, das die Zusammensetzungen im Optimum als etwa viermal so gut ausweist, als solche, die z.B. nur Molybdändisulfid enthalten.

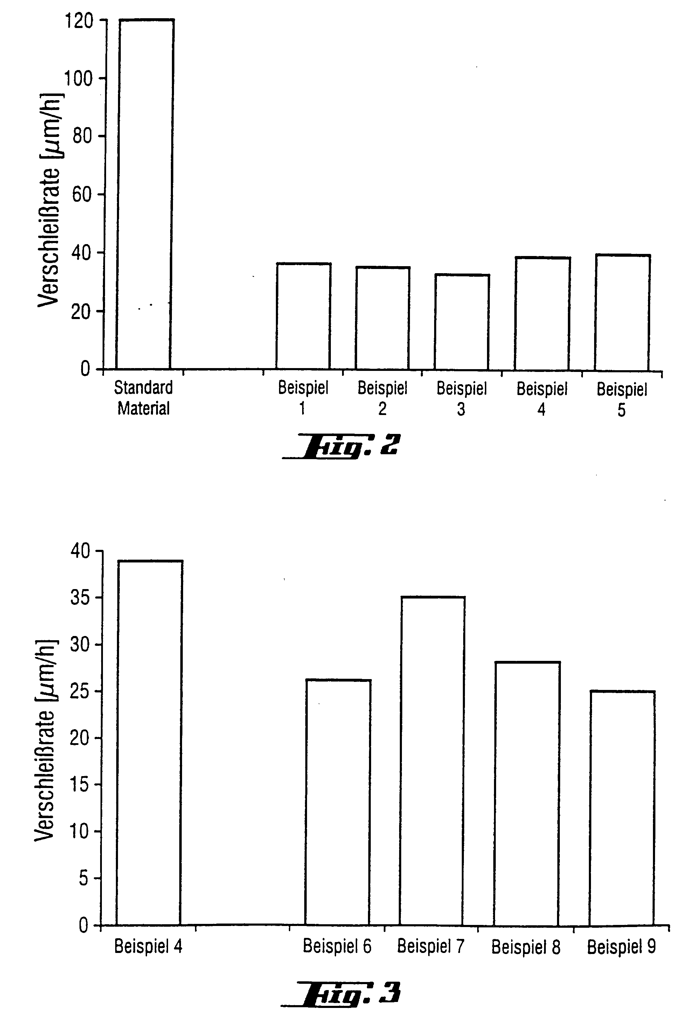

Zur Verdeutlichung der erfindungsgemäß erzielbaren Verbesserungen wurden im weiteren die in Tabelle 1 zusammen mit den Reibwerten und Verschleißraten aus der Stift/Walze-Prüfung zusammengesetzten Materialzusammensetzung geprüft. In der Figur 2 sind die Ergebnisse graphisch gegenübergestellt, die zeigen, daß die Füllstoffkombination in jedem Fall besser abschneidet, als die Verwendung jeweils einer der beiden Komponenten.

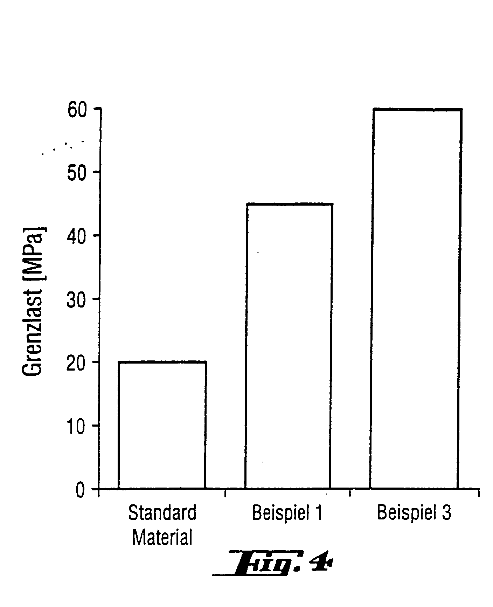

Aus den in den Tabellen 2 und der Figur 3 gegenübergestellten Ergebnissen der Beispielszusammensetzungen 7 - 11 geht hervor, daß die erfindungsgemäßen Materialien auch mit weiteren Komponenten kombiniert werden können, ohne die positiven Eigenschaften zu verlieren. Man sieht, daß durch die Zusätze weitere Verbesserungen möglich sind.

Darüber hinaus wurde die Wirksamkeit von Wolframsulfid geprüft. Das entsprechende Ergebnis vom Stift/Walze-Prüfstand ist in der Tabelle 3 dargestellt. Es wird deutlich, daß zur Herbeiführung des erfindungsgemäßen Effektes auch andere, dem Molybdändisulfid strukturell ähnliche Materialien geeignet sein können.

Von den Beispielzusammensetzungen Nr. 1 und 3 wurden Buchsen des Durchmessers 22 mm hergestellt und im rotierenden Prüflauf auf ihre Grenzbelastbarkeit geprüft. Als Grenzlast wurde die höchstmögliche Last definiert, bei der unter einer Geschwindigkeit von 0,075 m/s eine Laufstrecke von 13,5 km erreicht wurde. Ausfallkriterium war starker Anstieg der Temperatur, was sich bei nachfolgender Untersuchung als gleichbedeutend mit einer mittleren Verschleißtiefe von 90 µm erwies. Das Ergebnis von Probe 3 entspricht bei anderer Auswertung einem pv-Wert von 4,5 MPam/s. Die Ergebnisse sind in der Figur 4 dem Stand der Technik gegenübergestellt.

Die Tabelle 4 verdeutlicht, daß die erfindungsgemäßen Materialien in ihrer Leistungsfähigkeit in der Stoßdämpferanwendung dem Stand der Technik gleichwertig sind. Sowohl die Kavitationsbeständigkeit als auch der Reibwert sind vergleichbar gut. Der Tabelle liegt ein Stoßdämpferprüfprogramm mit extremer Kavitationsbeanspruchung zugrunde. Ausfallkriterium bei der Lebensdauerermittlung war hier die vollständige oder teilweise Gleitflächenablösung. Die Reibwerte wurden an Buchsen o.g. Dimensionen gegen Stoßdämpferkolbenstanden bei einer Belastung von 1000 N und einer Gleitgeschwindigkeit von 20 mm/s unter Tropfölschmierung ermittelt.

**Tabelle 1**

| Bsp.Nr. | Zusammensetzung, Vol%. | Verschleiß [µm/h] | Reibwert |
|---|---|---|---|
| 0 | PLTFE 80, MoS₂ 20 | 120 | 0,20 |
| 1 | PTFE 55, BN 12,8, MoS₂ 32,2 | 36 | 0,23 |
| 2 | PTFE 60, BN 20, MoS₂ 20 | 35 | 0,23 |
| 3 | PTFE 65, BN 12,5 MoS₂ 22,5 | 32 | 0,21 |
| 4 | PTFE 70, BN 15, MoS₂ 15 | 39 | 0,23 |
| 5 | PTFE 75, BN 7,2, MoS₂ 17,8 | 40 | 0,20 |

**Tabelle 2**

| Bsp.Nr. | Zusammensetzung, Vol% | Verschleiß [µm/h] | Reibwert |
|---|---|---|---|
| 4(z.Vgl.) | PTFE 70, BN 15, MoS₂ 15 | 39 | 0,23 |
| 6 | PTFE 70, BN 13, MoS₂ 13, Koks 4 | 26 | 0,18 |
| 7 | PTFE 70, BN 13, MoS₂ 13, Si₃N₄ 4 | 35 | 0,24 |
| 8 | PTFE 70, BN 13, MoS₂ 13, C-Faser 4 | 28 | 0,21 |
| 9 | PTFE 70, BN 13, MoS₂ 13, PI 4 | 25 | 0,18 |

**Tabelle 3**

| Bsp.Nr. | Zusammensetzung, Vol% | Verschleiß [µm/h] | Reibwert |
|---|---|---|---|
| 4(z.Vgl.) | PTFE 70, BN 15, MoS₂ 15 | 39 | 0,23 |
| 10 | PTFE 70, BN 15, WS₂ 15 | 36 | 0,22 |

**Tabelle 4**

| Bsp.Nr. | Zusammensetzung, Vol% | Lebensdauer [h] | Reibwert |
|---|---|---|---|
| 0 (Std.d.T.) | PTFE 80, MoS₂ 20 | 37 | 0,018 |
| 3 | PTFE 65, BN 12,5, MoS₂ 22,5 | 40 | 0,020 |
| 5 | PTFE 75, BN 7,2, MoS₂ 17,8 | 33 | 0,019 |

## Patentansprüche

1. Gleitlagerwerkstoff mit einem porösen Bronzegerüst, in das ein Gleitmaterial eingelagert ist, wobei
- das Gleitmaterial aus mindestens einem Fluorthermoplasten und Füllstoffen besteht,
- der Anteil des Fluorthermoplasts bzw. der Fluorthermoplaste 50 bis 85 Vol.-% beträgt,
- als Fluorthermoplast PTFE bzw. als Fluorthermoplaste PTFE mit Zusätzen eines oder mehrerer Fluorthermoplaste aus ETFE, PCTFE, ECTFE, PVDF, PFA oder FEP vorgesehen sind, und
- die Füllstoffe bezogen auf das Gleitmaterial aus:
- 5 bis 48 Vol.-% Bornitrid in hexagonaler Modifikation und
- 2 bis 45 Vol.-% mindestens einer Metallverbindung mit Schichtstruktur gewählt aus MoS2, Wolframsulfid, Titansulfid und Titanjodid bestehen,
- wobei gegebenenfalls bis zu 40 Vol.-% der Füllstoffkombination Bornitrid/Metallverbindung durch weitere Füllstoffe ersetzt sind.

2. Gleitlagerwerkstoff nach Anspruch 1, **dadurch gekennzeichnet, daß** die Anteile des Bornitrids 6,25 bis 32 Vol.-% und die der Metallverbindung 5 bis 30 Vol.-% betragen.

3. Gleitlagerwerkstoff nach einem der Ansprüche 1 oder 2, **dadurch gekennzeichnet, daß** die Füllstoffe eine Teilchengröße <40 µm aufweisen.

4. Gleitlagerwerkstoff nach Anspruch 3, **dadurch gekennzeichnet, daß** die Füllstoffe eine Teilchengröße <20 µm aufweisen.

5. Gleitlagerwerkstoff nach einem der Ansprüche 1 bis 4, **dadurch gekennzeichnet, daß** es sich bei den weiteren Füllstoffen um einen oder mehrere aus der Gruppe der Hartstoffe, wie Si₃N₄ oder Borcarbid, der Pigmente wie Koks, der Fasermaterialien wie Graphit-Kurzfasern oder Aramidfasern, der Festschmierstoffe wie Graphit, der Duroplaste oder der Hochtemperaturthermoplaste wie PAI oder PI handelt.

## Claims

1. A plain bearing material comprising a porous bronze support structure into which an anti-friction material is Incorporated, wherein
- the anti-friction material comprises at least one fluorothermoplastic and fillers,
- the proportion of the fluorothermoplastic or the fluorothermoplastics is from 50 to 85% by volume,
- the fluorothermoplastic is PTFE or the fluorothermoplastics are PTFE with additions of one or more fluorothermoplastics comprising ETFE, PCTFE, ECTFE, PVDF, PFA or FEP, and
- the fillers in relation to the anti-friction material comprise:
- from 5 to 48% by volume of boronitride in the hexagonal modification, and
- from 2 to 45% by volume of at least one metal compound with a stratified structure selected from MoS2, tungsten sulphide, titanium sulphide and titanium iodide,
- wherein optionally up to 40% by volume of the filler combination boronitride/metal compound is replaced by further fillers.

2. A plain bearing material according to claim 1 **characterised in that** the proportions of boronitride are from 6.25 to 32% by volume and those of the metal compound are from 5 to 30% by volume.

3. A plain bearing material according to one of claims 1 and 2 **characterised in that** the fillers are of a particle size < 40 µm.

4. A plain bearing material according to claim 3 **characterised in that** the fillers are of a particle size < 20 µm.

5. A plain bearing material according to one of claims 1 to 4 **characterised in that** the further fillers are one or more from the group of hard substances such as Si₃N₄ or borocarbide, pigments such as coke, fibre materials such as short graphite fibres or aramid fibres, solid lubricants such as graphite, thermosetting plastic materials or high-temperature thermoplastic materials such as PAI or PI.

## Revendications

1. Matériau constitutif de paliers lisses présentant une structure poreuse en bronze, dans laquelle est inséré un matériau lisse, et où :
- le matériau lisse se compose d'au moins un thermoplastique fluoré et de matières de charge,
- la fraction du thermoplastique fluoré ou des thermoplastiques fluorés est comprise entre 50 et 85 % en volume,
- on prévolt en tant que thermoplastique fluoré du PTFE ou en tant que thermoplastiques fluorés du PTFE avec des agents d'addition d'un ou de plusieurs thermoplastiques fluorés en ETFE, PCTFE, ECTFE, PVDF, PFA ou FEP, et
- les matières de charge, sur la base du matériau lisse, se composent de
- 5 à 48 % en volume de nitrure de bore selon une modification hexagonale et de
- 2 à 45 % en volume d'au moins un composé métallique présentant une structure en couches sélectionné parmi MoS₂, le sulfure de tungstène, le sulfure de titane et l'iodure de titane,
- où éventuellement jusqu'à 40 % en volume de la combinaison de matières de charge nitrure de bore / composé métallique sont remplacés par d'autres matières de charge.

2. Matériau constitutif de paliers lisses selon la revendication 1, **caractérisé en ce que** la fraction du nitrure de bore est comprise entre 6,25 et 32 % en volume, et celle du composé métallique entre 5 et 30 % en volume.

3. Matériau constitutif de paliers lisses selon l'une des revendications 1 ou 2, **caractérisé en ce que** les matières de charge présentent une taille de particules < 40 µm.

4. Matériau constitutif de paliers lisses selon la revendication 3, **caractérisé en ce que** les matières de charge présentent une taille de particules < 20 µm.

5. Matériau constitutif de paliers lisses selon l'une des revendications 1 à 4, **caractérisé en ce qu'**il s'agit, concernant les autres matières de charge, d'une ou plusieurs matières issues du groupe des matériaux à résistance mécanique élevée, comme Si₃N₄ ou le carbure de bore, des pigments comme le coke, des matériaux en fibres comme les fibres courtes de graphite ou les fibres d'aramide, des lubrifiants solides comme le graphite, des résines thermodurcissables ou des thermoplastiques haute température comme le PAI ou le PI.
